# EUROPÄISCHE PATENTANMELDUNG

(11) **EP 0 856 689 A2**
(43) Veröffentlichungstag der Anmeldung: **05.08.1998**
(21) Anmeldenummer: 97122748.3
(22) Anmeldetag: 23.12.1997
(51) Int. Cl.: F16J 15/32

(54) **Dichtungsanordnung**

(30) Priorität: 30.01.1997 DE 19703355
(71) Anmelder: Mannesmann Sachs Aktiengesellschaft, 97424 Schweinfurt (DE)
(72) Erfinder: Grosspietsch, Wolfgang Dipl.-Ing. (FH), 97422 Schweinfurt (DE); Otto, Thomas Dr., 97469 Gochsheim (DE); Mader, Gottfried, 97500 Ebelsbach (DE); Pagels, Olaf, 97493 Bergrheinfeld (DE); Riess, Thomas, Dipl.-Ing., 96179 Mürsbach (DE); Stampf, Volker, Dipl.-Ing., 97422 Schweinfurt (DE)

(57) **Zusammenfassung**

Eine Dichtungsanordnung mit einem in axialer Richtung abgestützten, mindestens je eine statische und dynamische Dichtlippe (1a, 1b) aufweisenden Dichtring (1), wobei die Dichtlippen (1a, 1b) radial an entsprechenden Dichtflächen (3, 4) anliegen, zeichnet sich dadurch aus, daß die Geometrie zumindest einer der Dichtlippen (1a, 1b) über den Umfang betrachtet in axialer und/oder radialer Richtung asymmetrisch ist, oder dadurch, daß im Grundkörper (1c) der Dichtung (1) über den Umfang verteilte Hohlräume (11) vorgesehen sind.

## Beschreibung

Die Erfindung betrifft eine Dichtungsanordnung mit einem in axialer Richtung abgestützten, mindestens je eine Dichtlippe aufweisenden Dichtring, wobei die Dichtlippen radial an entsprechenden Dichtflächen anliegen.

Bei den in einer solchen Dichtungsanordnung verwendeten zumindest teilweise gummielastischen Dichtungen liegen die dynamische und statische Dichtlippe in jeweils einer Ebene, die bei einer translatorischen Bewegung senkrecht zur Bewegungsrichtung und bei einer rotatorischen Bewegung senkrecht zur Drehachse angeordnet ist. In Umfangsrichtung ist der Querschnitt sowie die radiale und axiale Steifigkeit im wesentlichen konstant.

Dynamische Dichtungsanordnungen machen Geräusche, die umso störender sind, je niedriger der Umgebungs-Geräuschpegel ist.

Der Erfindung liegt die Aufgabe zugrunde, eine Dichtungsanordnung zu schaffen, die gegenüber dem Stand der Technik im Betrieb geräuschminimiert ist.

Die Lösung der Aufgabe erfolgt bei einer gattungsgemäßen Dichtungsanordnung dadurch, daß die Geometrie zumindest einer der Dichtlippen über den Umfang betrachtet in axialer und/oder radialer Richtung asymmetrisch ist.

Durch diese Ausgestaltung wird bewußt von herkömmlichen Konstruktionskriterien abgewichen. Damit wird im Betrieb eine Verringerung der Schwingungsamplituden und/oder eine Verschiebung der Frequenz erreicht. Durch eine entsprechende Variation der Asymmetrie kann das Geräuschverhalten der Dichtung dem Anwendungsfall angepaßt werden.

Zur Herbeiführung des erfindungsgemäßen Erfolges kann entweder der Dichtring konstruktiv asymmetrisch ausgebildet werden oder die Dichtung in der Dichtungsanordnung so eingebaut werden, daß sich die Asymmetrie einstellt.

Wenn ein herkömmlicher Dichtring verwendet werden soll, kann vorzugsweise zwischen ihm und der axialen Abstützfläche eine Scheibe mit über den Umfang unterschiedlicher Stärke eingesetzt sein. Durch die wellenförmige Ausbildung der Scheibe liegen die Dichtkanten jeder Dichtlippe folglich nicht auf derselben Umfangslinie.

Anstelle einer Scheibe kann zur Herbeiführung desselben Erfolges auch eine Wellfeder zwischen Dichtring und axialer Abstützfläche eingesetzt sein.

Eine Verschiebung der Dichtkante von einer Umfangslinie kann auch dadurch realisiert werden, daß zwar der Dichtring rotationssymmetrisch ausgebildet ist, die Dichtflächen jedoch zueinander exzentrisch angeordnet sind. Die Dichtlippe wird dann in dem durch den Versatz bestimmten zur Verfügung stehenden engeren Raum gegenüber dem diametral hierzu liegenden weiter zusammengepreßt, so daß die Dichtkante weiter nach axial außen verlegt wird. Im hierzu diametralen Bereich ist die Dichtung an sich mehr entspannt, so daß die Dichtlippe gegenüber einer Einbausituation, in der die Dichtflächen zueinander koaxial verlaufen, weiter nach axial innen springt.

Wenn die radial innere Dichtfläche unrund ausgebildet wird, wird eine weitere konstruktive Ausgestaltung der Dichtungsanordnung geschaffen, bei der ein herkömmlicher Dichtring Verwendung finden kann. Vorzugsweise ist die Dichtfläche im Querschnitt ballig oder in Form eines Kugeldreiecks ausgebildet.

Dazu ist insbesondere vorteilhaft, wenn die Umfangskontur der inneren Dichtfläche regelmäßig mit drei maximalen Durchmessern und drei minimalen Durchmessern ausgebildet ist.

Wenn ein herkömmlicher Dichtungssitz Verwendung finden soll, ist es vorteilhaft, die Dichtung so auszubilden, daß mindestens eine Dichtlippe mit einer über den Umfang unregelmäßig verteilten Rillierung versehen ist, so daß sich partiell eine Mehrzahl von Dichtkanten bezogen auf eine Axiallinie einstellt.

Eine andere Ausgestaltung besteht darin, daß mindestens eine Dichtlippe der Dichtung über den Umfang eine unterschiedliche axiale Länge aufweist. Auch dann liegen diametrale Dichtkanten nicht auf einer Umfangslinie.

Wenn mindestens eine Dichtlippe der Dichtung bezogen auf eine Umfangslinie einen unterschiedlichen Radius aufweist, wird die Dichtung an dieser Stelle weiter zusammengequetscht, so daß entweder die Dichtkante sich gegenüber der diametralen Dichtkante nach axial weiter außen verlagert oder die Dichtkante im zusammengequetschten Bereich breiter wird.

Derselbe Effekt ist erzielbar, wenn mindestens eine Dichtlippe an dem an sich rotationssymmetrischen Grundkörper der Dichtung exzentrisch angebunden wird.

Eine weitere Lösung der Aufgabe erfolgt bei einer gattungsgemäßen Dichtungsanordnung dadurch, daß im Grundkörper der Dichtung über den Umfang verteilte Hohlräume vorgesehen sind. Auch hier wird die axiale Steifigkeit der Dichtung an mindestens zwei Punkten bewußt reduziert.

Die quantitative Ausprägung der vorstehend erläuternden Merkmale ist vorzugsweise vom Betriebsdruck abhängig, dem die Dichtungsanordnung ausgesetzt ist.

Mit Hilfe einer Zeichnung soll die Erfindung nachfolgend näher erläutert werden. Es zeigt:
- Figur 1 -: ein erstes Ausführungsbeispiel einer Dichtungsanordnung im Axialschnitt;
- Figur 2 -: ein zweites Ausführungsbeispiel einer Dichtungsanordnung im Axialschnitt;
- Figur 3a -: ein dritte Ausführungsbeispiel einer Dichtungsanordnung im Axialschnitt;
- Figur 3b -: den Schnitt entlang der Linie III-III nach Figur 3a;
- Figur 4a -: ein viertes Ausführungsbeispiel einer Dichtungsanordnung im Axialschnitt;
- Figur 4b -: den Schnitt entlang der Linie IV-IV nach Figur 4a;
- Figur 5 -: ein fünftes Ausführungsbeispiel einer Dichtungsanordnung im Axialschnitt;
- Figur 6 -: ein sechstes Ausführungsbeispiel einer Dichtungsanordnung im Axialschnitt;
- Figur 7 -: ein siebtes Ausführungsbeispiel einer Dichtungsanordnung im Axialschnitt;
- Figur 8 -: ein achtes Ausführungsbeispiel einer Dichtungsanordnung im Axialschnitt;
- Figur 9 -: eine andere erfindungsgemäße Dichtungsausführung.

Die in den einzelnen Figuren dargestellten unterschiedlichen Dichtungsanordnungen zeigen einen in der Nut 2 einer Welle oder Kolbenstange 9 angeordneten Dichtring 1, der zwei radial wirkende Dichtlippen 1a, 1b aufweist.

Die Dichtungsanordnung ist in einem Zylinder 13 oder dergleichen vorgesehen. Sofern es sich bei dem mit 9 bezeichneten Bauteil um eine sich drehende Welle handelt, ist die dynamische Dichtlippe radial innen ausgebildet, sofern das Bauteil 9 eine oszillierende Kolbenstange ist, befindet sich die dynamische Dichtlippe radial außen. Dasselbe gilt für den Fall, daß eine Welle 9 steht und der sie umgebende Zylinder 13 rotatorisch angetrieben ist. In der Nut 2 ist die Dichtfläche 4 für die radial innere Dichtlippe 1a ausgebildet, im Zylinder 13 die Dichtfläche 3. Die Dichtung 1 stützt sich axial an der Abstützfläche 6 eines in dem Bauteil 9 vorgesehenen radialen Absatzes 9a ab.

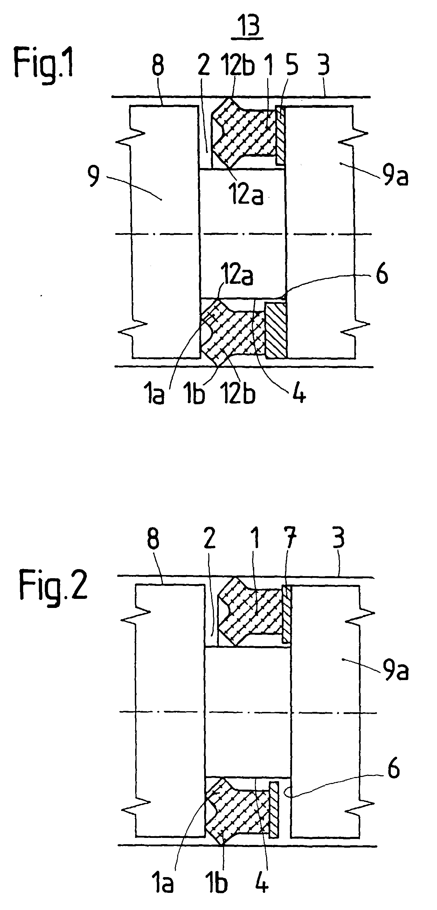

Wie Figur 1 zeigt, ist zwischen dem Dichtring 1 und dem Absatz 9a eine Scheibe 5 eingelegt, deren Stärke in Umfangsrichtung unterschiedlich ausgebildet ist, so daß die Scheibe 5 eine wellenförmig verlaufende Oberfläche besitzt. Aus der Figur geht deutlich hervor, daß die Dichtung 1 im Bereich der größeren Stärke der Scheibe 5 axial nach vorne gedrückt wird und dadurch die Dichtkanten 12a bzw. 12b nicht auf je einer Umfangslinie liegen. Derselbe Effekt wird erreicht, wenn anstatt einer Scheibe 5 eine Wellfeder 7 (vergleiche Figur 2) eingesetzt wird.

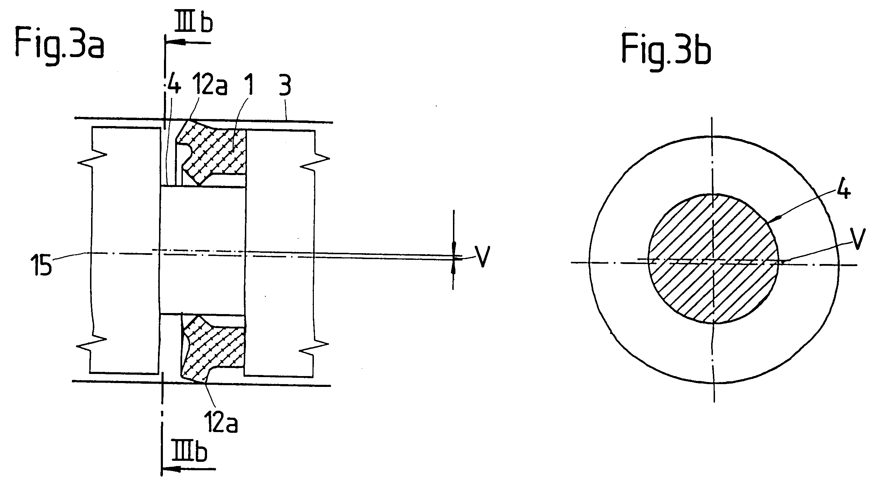

Wie Figuren 3 zeigen, kann die Nut 2 gegenüber der Mittellinie 15 des Zylinders 13 mit einem Versatz V exzentrisch angeordnet sein. Dadurch stellen sich unterschiedliche Radien im Dichtraum ein, so daß die Dichtung 1 gegenüber der konzentrischen Anordnung eingequetscht wird (Figur 3a obere Hälfte) und im dazu diametralen Bereich aufgeweitet wird. Auch hier werden die Dichtkanten 12a bzw. 12b in axialer Richtung von einer Umfangslinie versetzt.

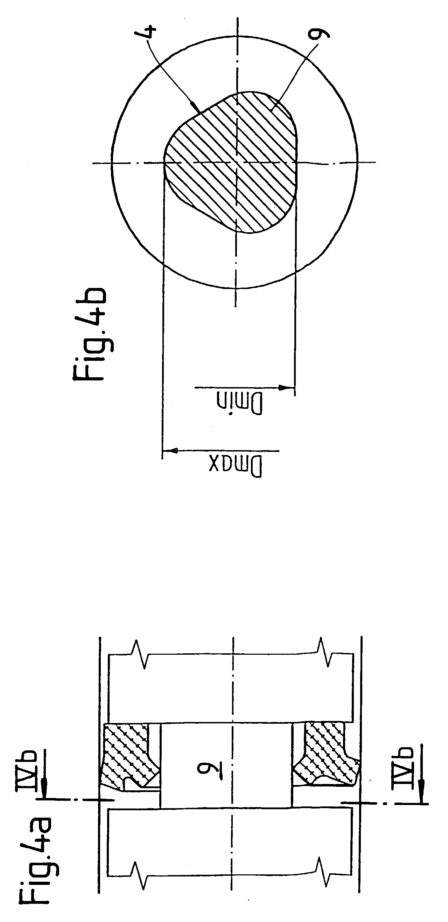

Der Nutgrund der Nut 2 kann wie Figur 4b zeigt, über den Umfang unregelmäßig ausgebildet werden und dabei drei maximale Durchmesser (Dₘₐₓ) und drei minimale Durchmesser (Dₘᵢₙ) aufweisen. Der Querschnitt erhält dadurch eine im wesentlichen dreieckförmige Gestalt mit abgerundeten Maxima. Durch diese ballige Ausgestaltung wird der bei der Anordnung nach Figur 3 erzielte Effekt an mehreren Stellen über den Umfang erzielt, und so also eine über den Umfang veränderliche Radialsteife des Dichtrings 1 erzeugt.

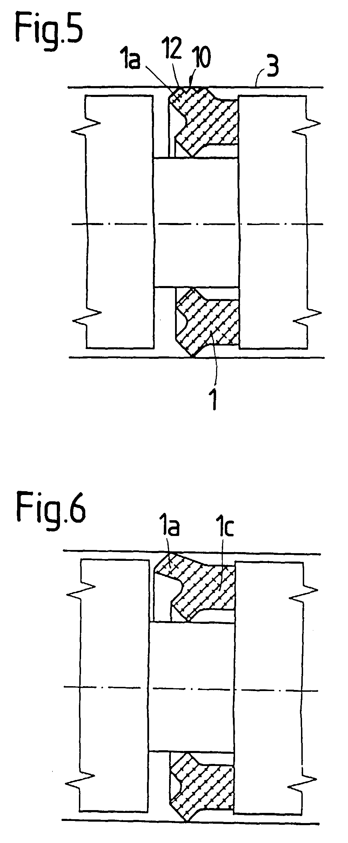

Figur 5 zeigt, daß der Dichtring 1 an seiner Dichtlippe 1a über den Umfang verteilt unterschiedliche Rillierungen 10 aufweist. Das heißt, es sind Stellen vorgesehen, an denen eine Rillierung 10 vorhanden ist und solche, an denen diese fehlt. Dadurch werden an der Dichtfläche 3 über Teilbereiche des Umfangs eine Mehrzahl von Dichtkanten 12 ausgebildet. Bei dem in Figur 6 dargestellten Ausführungsbeispiel ist die Dichtlippe 1a über Teilbereiche des Umfangs axial länger ausgebildet. Der Körper 1c des Dichtrings 1 ansonsten ist rotationssymmetrisch ausgeformt.

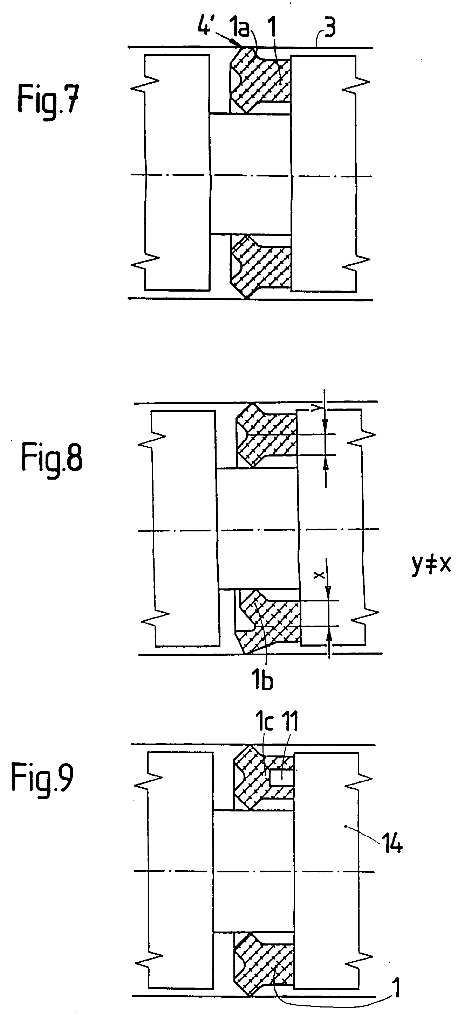

Bei dem in Figur 7 dargestellten Ausführungsbeispiel ist der Radius der dynamischen Dichtlippe (hier: 1a) über den Umfang des Dichtrings 1 veränderlich. Dadurch erfolgt eine Zusammenquetschung der Dichtlippe 1a und eine breitere Anlagefläche an der Dichtfläche 3. Es ist ebenso denkbar, die innere Dichtlippe 1b exzentrisch anzubinden, so daß das in Figur 8 gezeigte Maß x vom diametral gegenüberliegenden Maß y abweicht.

Figur 9 zeigt eine andere erfindungsgemäße Dichtungsanordnung, bei den der Dichtring 1 an der dem Absatz 14 zugewandten Seite mit über den Umfang verteilt angeordneten Hohlräumen 11 versehen ist. Durch diese Ausbildung wird eine diskontinuierliche Steifigkeit in radialer und/oder axialer Richtung erreicht. Die Hohlräume können regelmäßig oder unregelmäßig über den Umfang verteilt angeordnet sein.

### Bezugszeichenliste

- 1: Dichtring
- 1a: innere Dichtlippe
- 1b: äußere Dichtlippe
- 1c: Grundkörper
- 2: Nut
- 3: Dichtfläche
- 4: Dichtfläche
- 5: Scheibe
- 6: Abstützfläche
- 7: Wellfeder
- 8: Zylinderraum
- 9: Welle/Kolbenstange
- 9a: Absatz
- 10: Relierung
- 11: Hohlraum
- 12a: Dichtkante
- 12b: Dichtkante
- 13: Zylinder
- 14: Absatz
- 15: Mittellinie

## Patentansprüche

1. Dichtungsanordnung mit einem in axialer Richtung abgestützten, mindestens je eine statische und dynamische Dichtlippe (1a, 1b) aufweisenden Dichtring (1), wobei die Dichtlippen (1a, 1b) radial an entsprechenden Dichtflächen (3, 4) anliegen, **dadurch gekennzeichnet, daß** die Geometrie zumindest einer der Dichtlippen (1a, 1b) über den Umfang betrachtet in axialer und/oder radialer Richtung asymmetrisch ist.

2. Dichtungsanordnung nach Anspruch 1, **dadurch gekennzeichnet, daß** zwischen dem Dichtring (1) und der axialen Abstützfläche (6) eine Scheibe (5) mit über den Umfang unterschiedlicher Stärke eingesetzt ist.

3. Dichtungsanordnung nach Anspruch 1, **dadurch gekennzeichnet, daß** zwischen dem Dichtring (1) und der axialen Abstützfläche (6) eine Wellfeder (7) eingesetzt ist.

4. Dichtungsanordnung nach Anspruch 1, **dadurch gekennzeichnet, daß** der Dichtring (1) rotationssymmetrisch ausgebildet ist und die Dichtflächen (3, 4) zueinander exzentrisch (Versatz V) angeordnet sind.

5. Dichtungsanordnung nach Anspruch 1, **dadurch gekennzeichnet, daß** die radial innere Dichtfläche (4) unrund ausgebildet ist.

6. Dichtungsanordnung nach Anspruch 5, **dadurch gekennzeichnet, daß** die Dichtfläche (4) im Querschnitt ballig ausgebildet ist.

7. Dichtungsanordnung nach Anspruch 5 oder 6, **dadurch gekennzeichnet, daß** die Umfangskontur der Dichtfläche (4) regelmäßig mit drei maximalen Durchmessern (Dₘₐₓ) und drei minimalen Durchmessern (Dₘᵢₙ) ausgebildet ist.

8. Dichtungsanordnung nach Anspruch 1, **dadurch gekennzeichnet, daß** die mindestens eine Dichtlippe (1a, 1b) mit einer über den Umfang unregelmäßig verteilten Rillierung (10) versehen ist, so daß sich partiell eine Mehrzahl von Dichtstellen (12a) einstellt.

9. Dichtungsanordnung nach Anspruch 1, **dadurch gekennzeichnet, daß** mindestens eine Dichtlippe (1a, 1b) des Dichtrings (1) über den Umfang eine unterschiedliche axiale Länge aufweist.

10. Dichtungsanordnung nach Anspruch 1, **dadurch gekennzeichnet, daß** mindestens eine Dichtlippe (1a, 1b) des Dichtrings (1) bezogen auf eine Umfangslinie einen unterschiedlichen Radius aufweist.

11. Dichtungsanordnung nach Anspruch 1, **dadurch gekennzeichnet, daß** mindestens eine Dichtlippe (1a, 1b) am rotationssymmetrischen Grundkörper (1c) exzentrisch angebunden ist.

12. Dichtungsanordnung mit einem in axialer Richtung abgestützten, mindestens je eine statische und dynamische Dichtlippe (1a, 1b) aufweisenden Dichtring (1), wobei die Dichtlippen (1a, 1b) radial an entsprechenden Dichtflächen (3, 4) anliegen, **dadurch gekennzeichnet, daß** im Grundkörper (1c) des Dichtrings (1) über den Umfang verteilte Hohlräume (11) vorgesehen sind.
